# EUROPÄISCHE PATENTSCHRIFT

(11) **EP 1 763 641 B1**
(45) Veröffentlichungstag und Bekanntmachung des Hinweises auf die Patenterteilung: **15.04.2009**
(21) Anmeldenummer: 05754484.3
(22) Anmeldetag: 23.06.2005
(51) Int. Cl.: F16C 33/78, C23C 2/00

(54) **LAGERUNG FÜR EINE IN EINEM METALLSCHMELZEBAD GETAUCHT ANGEORDNETE UMLENK- ODER FÜHRUNGSROLLE**
BEARING ARRANGEMENT FOR A DEFLECTION OR GUIDE ROLLER IMMERSEDLY ARRANGED IN A MOLTEN METAL BATH
LOGEMENT DE PALIER POUR ROULEAU DE GUIDAGE OU DE RENVOI PLACE AU TREMPE DANS UN BAIN DE METAL EN FUSION

(30) Priorität: 02.07.2004 DE 102004032324
(43) Veröffentlichungstag der Anmeldung: 21.03.2007
(73) Patentinhaber: DUMA Maschinen- und Anlagenbau GmbH, 47167 Duisburg (DE)
(72) Erfinder: PANNENBECKER, Heinrich, 46569 Hünxe (DE)
(74) Vertreter: Cohausz & Florack
(86) Internationale Anmeldenummer: PCT/EP2005/006773
(87) Internationale Veröffentlichungsnummer: WO 2006/002822

(56) Entgegenhaltungen:
- DE-A1- 3 940 890
- DE-A1- 4 207 034
- DE-A1- 4 307 282
- DE-B3- 10 319 840
- PATENT ABSTRACTS OF JAPAN Bd. 017, Nr. 195 (C-1049), 16. April 1993 (1993-04-16) & JP 04 346641 A (KAWASAKI STEEL CORP), 2. Dezember 1992 (1992-12-02)
- PATENT ABSTRACTS OF JAPAN Bd. 016, Nr. 304 (C-0959), 6. Juli 1992 (1992-07-06) & JP 04 083858 A (SUMITOMO METAL IND LTD), 17. März 1992 (1992-03-17)

## Beschreibung

Die Erfindung betrifft eine Lagerung für eine in einem Metallschmelzebad getaucht angeordnete Umlenk- oder Führungsrolle für zu beschichtendes Metallband, die an Rollentragarmen mittels Lager drehbar gelagert ist, wobei die Lager gegen das Metallschmelzebad mittels mindestens einer Induktionsspule abgedichtet sind, die eine der Umlenk- oder Führungsrolle zugeordnete Achse, Welle oder einen Tragzapfen umgibt und einen ringförmigen Dichtspalt begrenzt.

Eine derartige Lagerung ist in der deutschen Patentschrift DE 103 19 840 B3 beschrieben. Die Induktionsspule einer solchen Lagerung erzeugt ein die Metallschmelze zurückhaltendes elektromagnetisches Feld, wobei sowohl ein Wanderfeld als auch ein Sperrfeld zur Anwendung kommen kann. Die Induktionsspule unterliegt im Vergleich zu herkömmlichen Keramikdichtungen praktisch keinem mechanischen Verschleiß. Versuche bei der Anmelderin haben gezeigt, dass die Induktionsspule einer gattungsgemäßen Lagerung mit einer relativ hohen Feldstärke bzw. elektrischen Leistung betrieben werden musste, um ein Eindringen von Metallschmelze in den Lagerbereich sicher zu verhindern. Die Höhe der erforderlichen Feldstärke nimmt grundsätzlich mit der Weite des Dichtspaltes zu, wobei aber selbst bei einem relativ engen Dichtspalt noch eine elektrische Leistung bzw. Feldstärke erforderlich ist, die gegebenenfalls zu einer erheblichen thermischen Belastung der der Induktionsspule benachbarten Teile, insbesondere der Lager führt oder führen kann.

Aus der DE 42 07 034 C2 ist eine Drehlagerung für in Tauchbädern mit schmelzflüssigen Metallen angeordnete Umlenk- bzw. Führungsrollen bekannt. Die bekannte Drehlagerung weist eine auf einem Tragzapfen festlegbare Innenhülse sowie eine zur Innenhülse relativ drehbare und diese mit radialem Abstand umschließende Außenhülse auf, wobei der Tragzapfen aus Edelstahl und die Innenhülse und die Außenhülse aus keramischen Werkstoffen oder aus Stellite bestehen.

Der vorliegenden Erfindung liegt die Aufgabe zugrunde, eine Lagerung der eingangs genannten Art dahingehend zu verbessern, dass bei zuverlässiger Abdichtung der Lager gegen Eindringen von Metallschmelze zugleich eine zu hohe thermische Beanspruchung der Lager vermieden wird.

Diese Aufgabe wird bei einer Lagerung der eingangs genannten Art erfindungsgemäß dadurch gelöst, dass in dem Dichtspalt eine Hülse aus keramischem Werkstoff mit geringem Abstand zu der Induktionsspule angeordnet wird.

Durch den Einsatz der keramischen Hülse kann der durch die Induktionsspule begrenzte Dichtspalt sehr eng gewählt werden. Je enger der Dichtspalt ist, desto geringer ist die erforderliche elektrische Leistung bzw. Feldstärke, mit der die Induktionsspule betrieben werden muss. Dementsprechend wird die thermische Belastung der der Induktionsspule benachbarten Teile verringert. Die keramische Hülse wirkt dabei zugleich als Wärmeisolator, sodass der dem jeweiligen Lager zufließende Wärmestrom erheblich reduziert ist. Ist die Weite des Dichtspaltes durch den Einsatz der keramischen Hülse relativ eng gewählt, so ist grundsätzlich auch die Abdichtung des Lagers gegen Eindringen von Metallschmelze verbessert. Mit der erfindungsgemäßen Lagerung lassen sich längere Standzeiten (Nutzungszeiten) der damit ausgerüsteten Umlenk- oder Führungsrolle erreichen.

Das dem jeweiligen Rollenende bzw. Rollentragarm zugeordnete Lager ist vorzugsweise ein Wälzlager, insbesondere ein Pendelrollenlager. Fertigungstechnisch ist es vorteilhaft, wenn das Lager in einem separat herstellbaren Lagergehäuse eingesetzt wird, das unmittelbar oder über einen Adapter mit der Stirnseite der Umlenk- bzw. Führungsrolle durch eine Schweiß- oder Schraubverbindung verbunden ist.

Nach einer bevorzugten Ausgestaltung der erfindungsgemäßen Lagerung ist die keramische Hülse mit dem aus Metall hergestellten Lagergehäuse abgedichtet verbunden. Diese abdichtende Verbindung kann gemäß einer weiteren Ausgestaltung der Erfindung dadurch realisiert werden, dass die keramische Hülse gegen das Lagergehäuse abdichtend gedrückt wird, wobei federelastische Mittel vorgesehen sind, die unter Aufrechterhaltung der Druckwirkung zwischen Hülse und Lagergehäuse eine durch die unterschiedlichen Ausdehnungskoeffizienten von Metall und Keramik bedingte Relativverschiebung der Hülse gegenüber dem Lagergehäuse zulassen.

Die federelastischen Mittel können vorzugsweise aus mindestens einer Druckfeder bestehen. In einer weiteren konstruktiv günstigen Ausgestaltung ist diesbezüglich vorgesehen, dass die Druckfeder auf einer metallischen Hülse geführt ist, die eine Ausnehmung oder Bohrung in der keramischen Hülse durchdringt und durch eine Schraubverbindung am Lagergehäuse befestigt ist.

Um eine zuverlässige Abdichtung zwischen der Keramikhülse und dem aus Metall hergestellten Lagergehäuse zu erreichen, wird in weiterer Ausgestaltung der erfindungsgemäßen Lagerung vorgeschlagen, dass die keramische Hülse und das Lagergehäuse sich berührende, konisch ausgebildete Dichtungsflächen aufweisen. Alternativ hierzu besteht eine weitere vorteilhafte Ausgestaltung darin, dass an der keramischen Hülse und dem Lagergehäuse ebene Stirnflächen ausgebildet sind. In diesem Fall wird zwischen den ebenen Stirnflächen vorzugsweise eine ringförmige Dichtung angeordnet.

Weitere bevorzugte und vorteilhafte Ausgestaltungen der erfindungsgemäßen Lagerung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine Vorderansicht auf eine zwei Tragarme aufweisende Lagerung einer Beschichtungsmittelbadrolle;
- Fig. 2: eine Schnittansicht im Bereich des unteren Endes eines der beiden Rollentragarme mit einer daran befestigten durchgehenden Achse und einer durch eine Induktionsspule abgedichteten Lagerung gemäß einem ersten Ausführungsbeispiel;
- Fig. 3: eine vergrößerte Darstellung der in Fig. 2 mit X gekennzeichneten Einzelheit;
- Fig. 4: eine der Fig. 2 ähnliche Schnittansicht einer durch eine Induktionsspule abgedichteten Lagerung gemäß einem zweiten Ausführungsbeispiel;
- Fig. 5: eine vergrößerte Darstellung der in Fig. 4 mit X gekennzeichneten Einzelheit;
- Fig. 6: eine der Fig. 2 ähnliche Schnittansicht einer durch eine Induktionsspule abgedichteten Lagerung gemäß einem dritten Ausführungsbeispiel;
- Fig. 7: eine vergrößerte Darstellung der in Fig. 6 mit X gekennzeichneten Einzelheit;
- Fig. 8: eine der Fig. 2 ähnliche Schnittansicht einer durch eine Induktionsspule abgedichteten Lagerung gemäß einem vierten Ausführungsbeispiel;
- Fig. 9: eine vergrößerte Darstellung der in Fig. 8 mit X gekennzeichneten Einzelheit;
- Fig. 10: eine der Fig. 2 ähnliche Schnittansicht einer durch eine Induktionsspule abgedichteten Lagerung gemäß einem fünften Ausführungsbeispiel;
- Fig. 11: eine vergrößerte Darstellung der in Fig. 10 mit X gekennzeichneten Einzelheit.

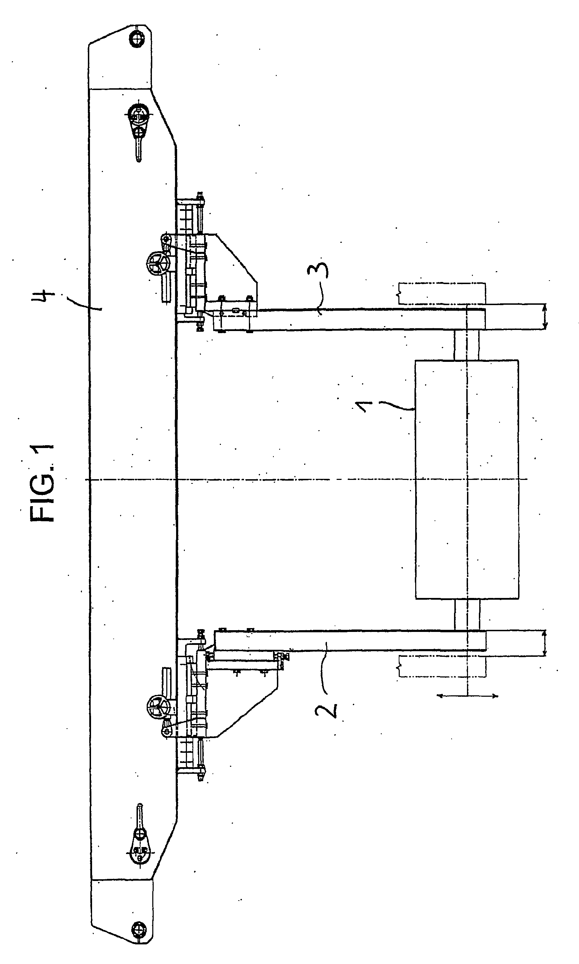

Die Fig. 1 zeigt eine in einem Metallschmelzebad, beispielsweise einem Zinkschmelzebad, getaucht anzuordnende Umlenk- oder Führungsrolle 1. Die Umlenk- bzw. Führungsrolle 1 wird nachfolgend der Einfachheit halber als Zinkbadrolle gezeichnet. Die Rollentragarme 2, 3 sind mit einer oberhalb des Zinkschmelzebades angeordneten Traverse 4 linear verstellbar verbunden. Der Rollentragarm 2 ist zudem in vertikaler Richtung verstellbar.

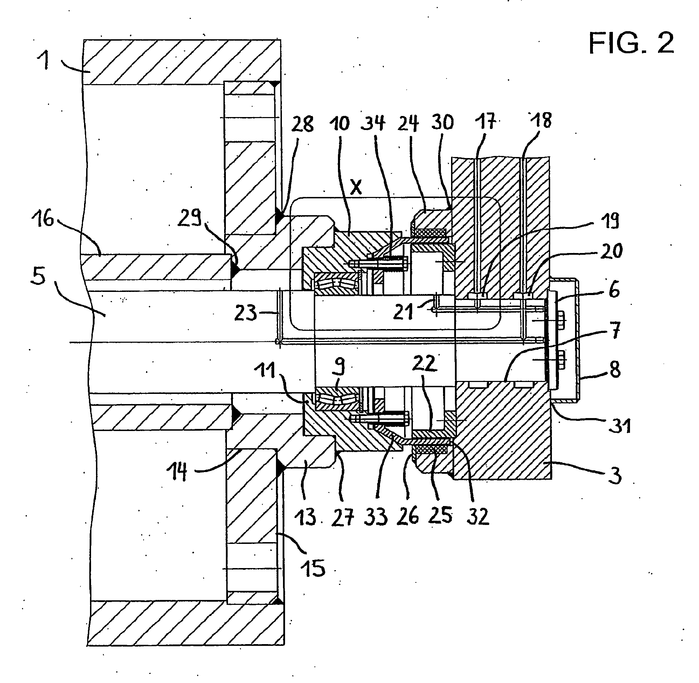

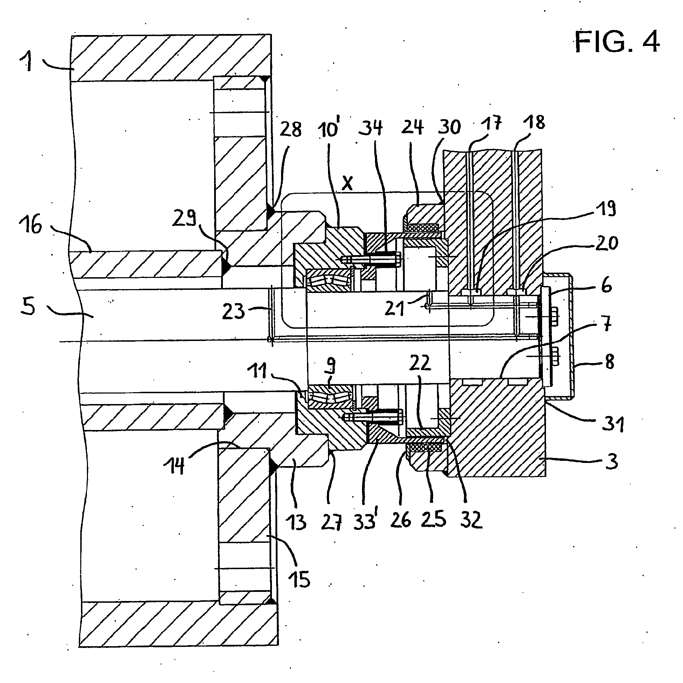

Die Zinkbadrolle 1 ist auf einer durchgehenden Achse gelagert, deren Enden in an den unteren Enden der Rollentragarme 2, 3 ausgebildeten Durchbrechungen bzw. Bohrungen eingesteckt sind. In den Figuren 2 und 4 ist zu erkennen, dass das jeweilige Ende der durchgehenden Achse 5 zwei Abstufungen aufweist, wobei die äußere Abstufung der axialen Festlegung der Achse 5 am zugeordneten Rollentragarm 2 bzw. 3 dient. Die Achse 5 ist drehfest mit den Rollentragarmen 2, 3'verbunden, indem an den Enden der Achse 5 jeweils eine Endscheibe 6 angeschraubt ist, deren Durchmesser größer als die die Achse aufnehmende Durchbrechung 7 des Rollentragarms ist. Die mit der Achse 5 lösbar verbundene Endscheibe 6 ist durch eine Dichtkappe 8 abgedeckt, die mit dem Rollentragarm 3 (oder 2) verschweißt ist.

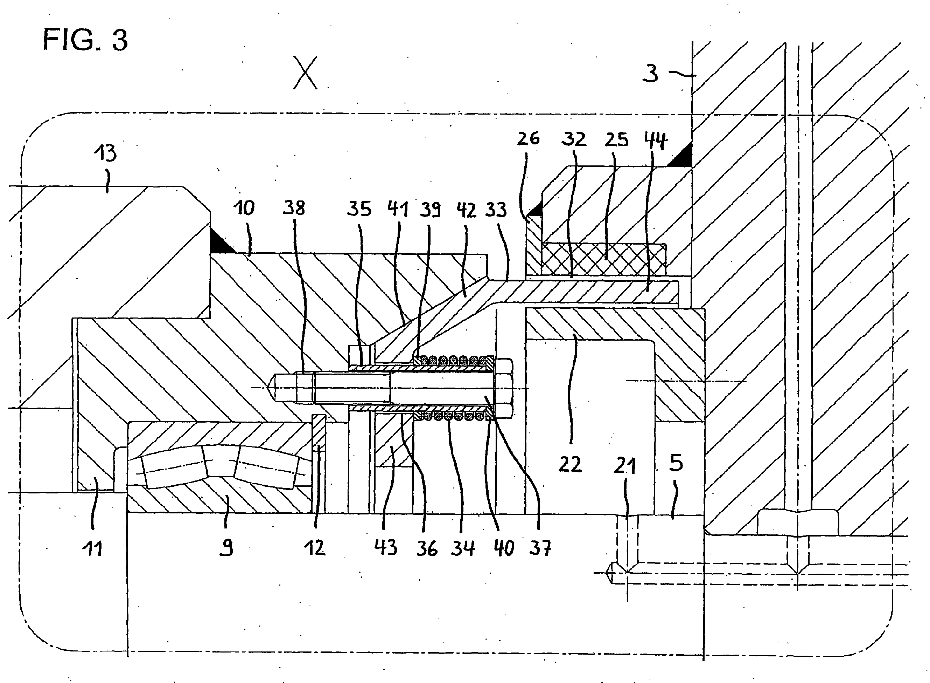

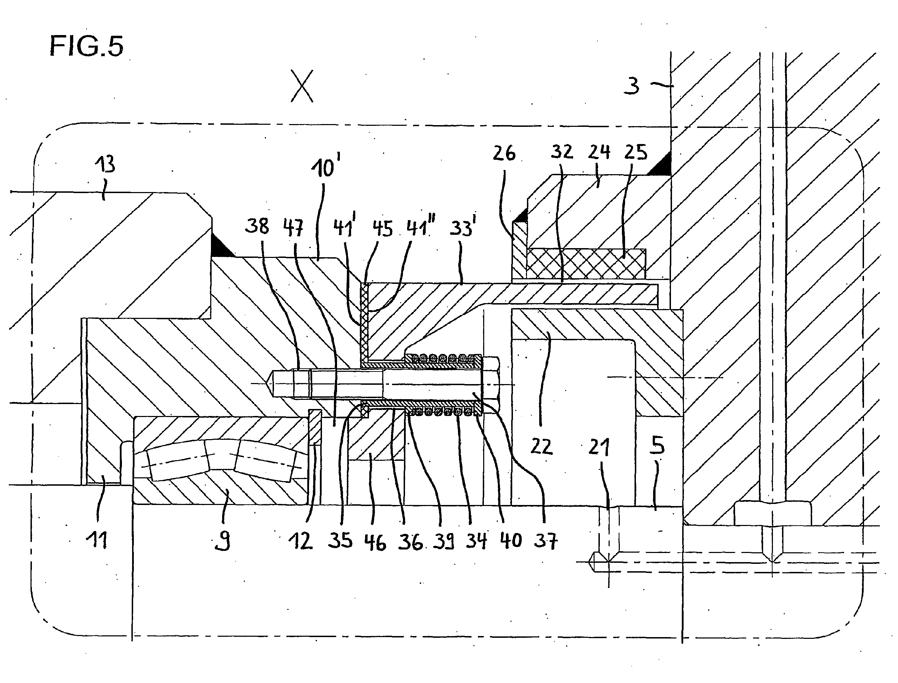

An der innenliegenden Abstufung der Achse 5 liegt der innere Laufring eines Wälzlagers 9 an, das vorzugsweise aus einem Pendelrollenlager besteht. Das Wälz- bzw. Pendelrollenlager 9 ist in einem ringförmigen Lagergehäuse 10 angeordnet, wobei der äußere Laufring des Lagers 9 durch einen umlaufenden, radial nach innen vorspringenden Absatz 11 des Lagergehäuses und einen Sicherungsring 12 axial festgelegt ist (vgl. Figuren 3 und 5). Der Absatz 11 des aus Metall bestehenden Lagergehäuses 10 endet mit geringem radialem Abstand zur Achse 5. Das Lagergehäuse 10 ist mit einem buchsenförmigen Adapter 13 verschweißt oder verschraubt, der wiederum in eine kreisförmige Ausnehmung 14 einer Stirnplatte 15 der Zinkbadrolle 1 formschlüssig eingesetzt und mit der Stirnplatte 15 verschweißt ist. Das Lagergehäuse 10 ist somit drehfest mit der Zinkbadrolle 1 verbunden. Die stirnseitigen Adapter 13 der Zinkbadrolle 1 sind ferner mit den Enden eines Rohres 16 verschweißt, das die durchgehende Achse 5 mit radialem Abstand koaxial umschließt und gegenüber der Metallschmelze abschirmt.

Ferner sind in dem jeweiligen Rollentragarm 2, 3 und dem zugeordneten Ende der Achse 5 axiale und radiale Lüftungsbohrungen ausgebildet, die so angeordnet sind, dass das Lager 9 zwischen einer Luft bzw. Gas zuleitenden Bohrung und einer ableitenden Bohrung liegt. Die im Rollentragarm 3 ausgebildeten Lüftungsbohrungen 17, 18 münden in der Durchbrechung 7 in Ringnuten 19, 20. Die Luft bzw. Gas zuleitende Radialbohrung 21 der Achse 5 mündet nahe dem Rollentragarm 3 innerhalb einer ringförmigen Topfscheibe 22, während die Luft bzw. Gas ableitende Radialbohrung 23 im Bereich des Adapters 13 angeordnet ist.

An der der Zinkbadrolle 1 zugewandten Seite des jeweiligen Rollentragarms 2, 3 ist ein ringförmiges Gehäuse bzw. ein Metallring 24 angebracht, der einen Absatz aufweist, in welchem eine Induktionsspule 25 eingesetzt ist. Die Induktionsspule 25 ist dabei in Keramik eingegossen oder mit einer anderen Isolierung (nicht gezeigt) umgeben. An der Stirnseite des Metallringes 24 ist ein Verschlussring 26 angeschweißt, der die Induktionsspule 25 axial abdeckt. Die umlaufenden Schweißnähte 27 bis 31 haben zugleich eine Abdichtungsfunktion. Die Induktionsspule 25 schließt an ihrem Innendurchmesser im wesentlichen bündig mit dem Innendurchmesser des Verschlussringes 26 sowie dem kleinsten Innendurchmesser des Metallringes 24 ab.

Der Induktionsspule 25 ist die eine Durchgangsöffnung aufweisende Topfscheibe 22 als Gegenpol zugeordnet. Die aus Metall bestehende Topfscheibe 22 ist mittels Schraubverbindungen am Rollentragarm 3 lösbar befestigt. Die Topfscheibe 22 ist radial beabstandet zur Achse 5 und axial beabstandet zum Lagergehäuse 10 angeordnet.

Die Induktionsspule 25 und der ringförmige Gegenpol 22 (Topfscheibe) begrenzen einen axialen Dichtspalt 32. In dem Dichtspalt 32 ist eine Hülse 33 aus keramischem Werkstoff mit radialem Abstand zu der Induktionsspule 25 und der Topfscheibe 22 angeordnet. Es ist zu erkennen, dass die Keramikhülse 33 die Induktionsspule 25 in axialer Richtung überragt.

Die keramische Hülse 33 ist mit dem Lagergehäuse 10 lösbar verbunden. Sie wird durch Druckfedern 34, die unter Aufrechterhaltung der Druckwirkung eine durch die unterschiedlichen Ausdehnungskoeffizienten von Metall und Keramik bedingte Verschiebung der Keramikhülse 33 gegenüber dem Lagergehäuse 10 zulassen, abdichtend gegen das Lagergehäuse 10 gedrückt.

Die Druckfedern 34 sind auf metallischen Hülsen 35 geführt, die jeweils eine Ausnehmung oder Bohrung 36 in der Keramikhülse 33 durchdringen und mittels Schraubbolzen 37 und zugeordneten Gewindebohrungen 38 im Lagergehäuse 10 an diesem befestigt sind. Die Enden jeder Druckfeder 34 sind über Ringscheiben 39, 40 an der Keramikhülse 33 bzw. am Kopf des Schraubbolzens 37 abgestützt. Der Durchmesser der Ausnehmungen bzw. Bohrungen 36 der Keramikhülse 33 ist unter Berücksichtigung der unterschiedlichen Ausdehnungskoeffizienten von Metall und Keramik so groß gewählt, dass die Keramikhülse 33 die Metallhülsen 35 in keinem Betriebszustand der Zinkbadrolle 1 berührt.

Bei dem in den Figuren 2 und 3 dargestellten Ausführungsbeispiel der erfindungsgemäßen Lagerung weisen die Keramikhülse 33 und das Lagergehäuse 10 sich berührende, konisch ausgebildete Dichtungsflächen 41 auf. Die Keramikhülse 33 besitzt hier also einen kegelförmigen Abschnitt 42, an dessen einem Ende sich ein ringscheibenförmiger Abschnitt 43 mit den Bohrungen 36 zur Durchführung der den Druckfedern 34 zugeordneten Metallhülsen 35 anschließt, und dessen anderes Ende in einen zylindrischen Abschnitt 44 übergeht, der in den durch die Induktionsspule 25 und die Topfscheibe 22 begrenzten Dichtspalt 32 ragt.

Das in den Figuren 4 und 5 dargestellte Ausführungsbeispiel unterscheidet sich von dem in den Figuren 2 und 3 dadurch, dass die keramische Hülse 33' und das Lagergehäuse 10' ebene Stirnflächen 41', 41" aufweisen, zwischen denen vorzugsweise eine ringförmige Dichtung 45 angeordnet ist. Ferner weist bei diesem Ausführungsbeispiel die Keramikhülse 33' an ihrem ringscheibenförmigen Abschnitt einen Absatz 46 auf, der zur Zentrierung der Keramikhülse 33' in die das Wälzlager 9 enthaltende Aufnahmebohrung 47 des Lagergehäuses 10' ragt.

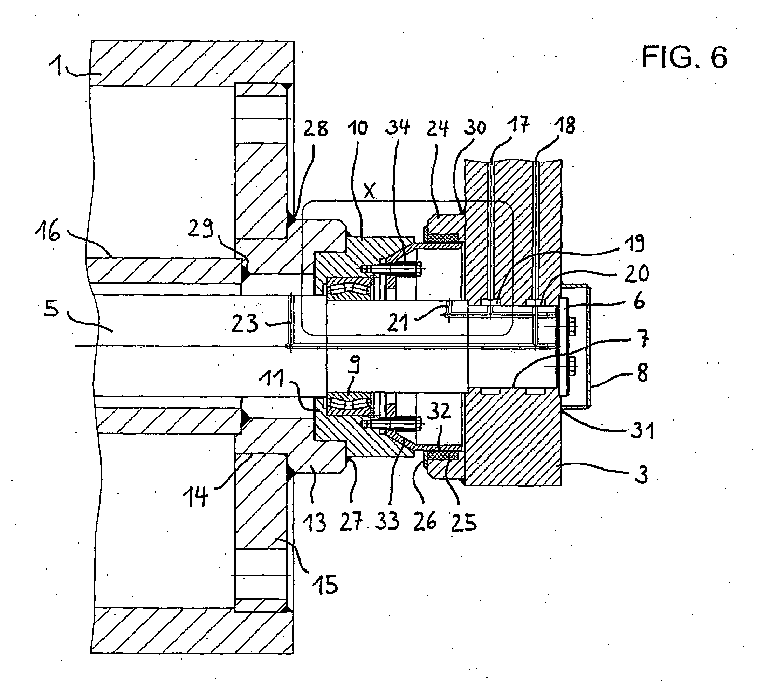

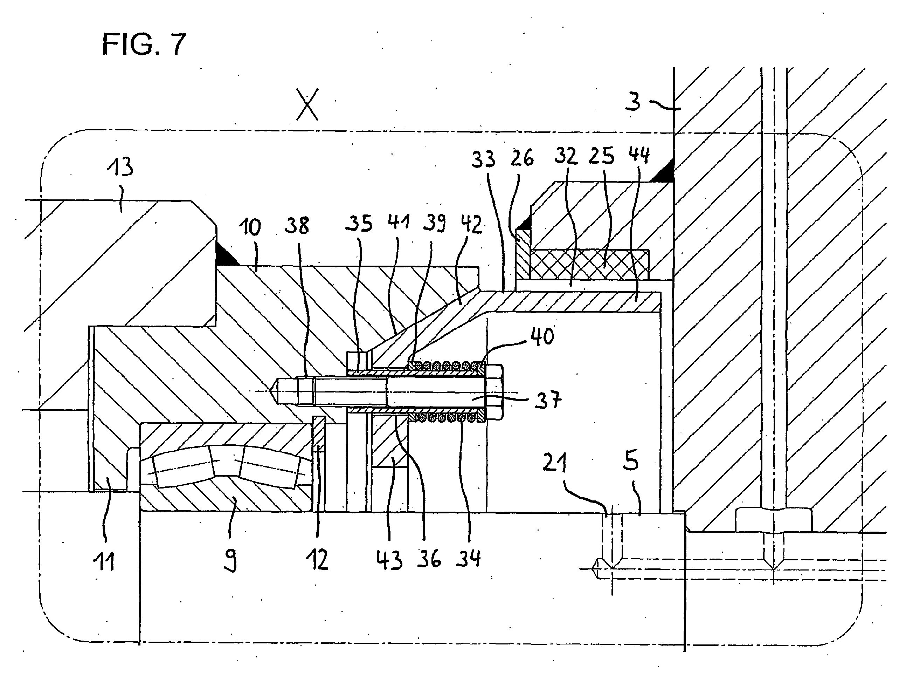

Das in den Figuren 6 und 7 dargestellte Ausführungsbeispiel unterscheidet sich von den zuvor beschriebenen Ausführungsbeispielen dadurch, dass die Induktionsspule 25, welche die Keramikhülse 33 außen mit geringem Abstand umgibt, ohne Gegenpol arbeitet. Der ringförmige bzw. topfscheibenförmige Gegenpol 22 gemäß den Figuren 2 bis 5 in diesem Fall nicht vorhanden ist. Die Abdichtung des Lagers 9 gegen Eindringen von Metallschmelze ist hier somit im wesentlichen durch die Keramikhülse (Keramikrohr) 33 und die außenliegende Induktionsspule (Außeninduktor) 25 verwirklicht.

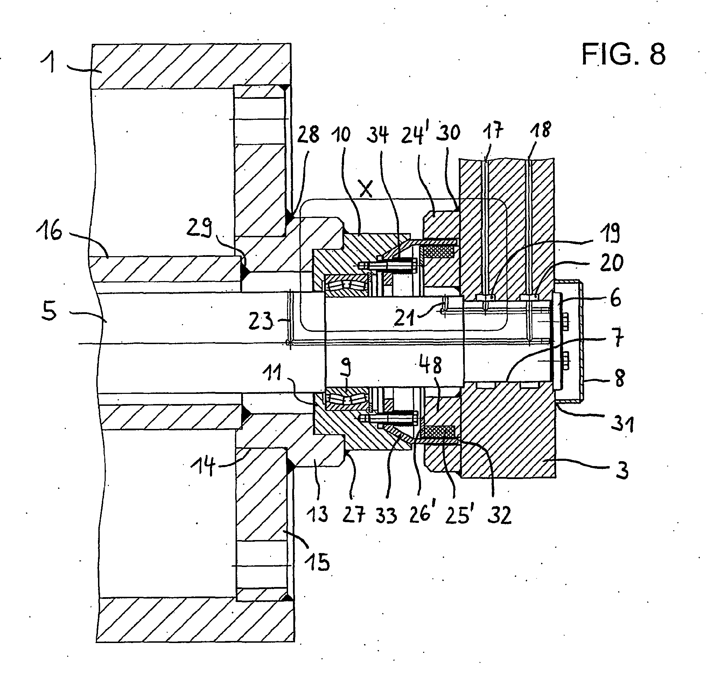

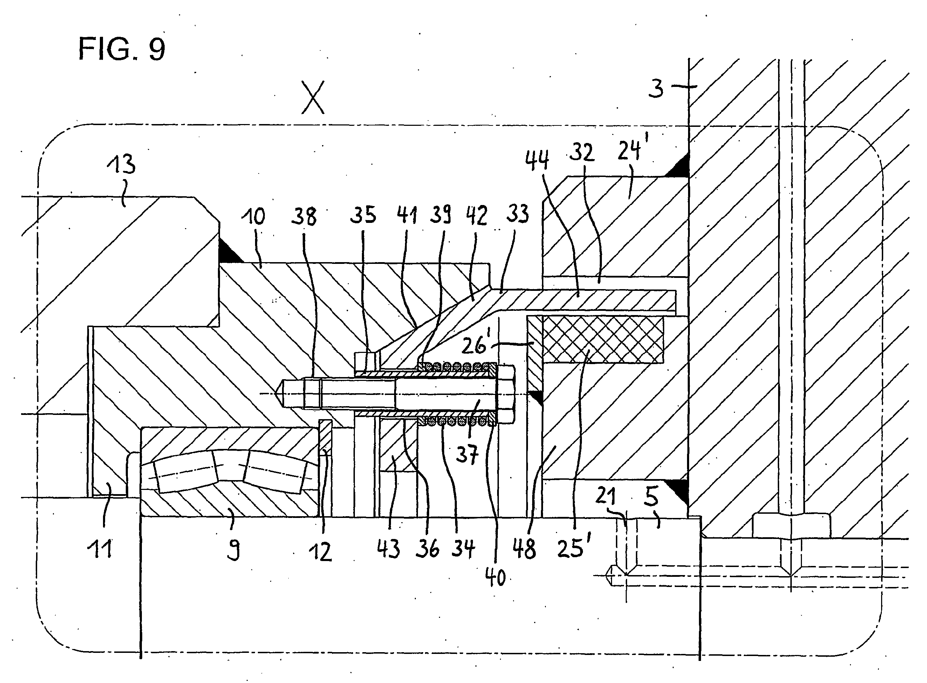

Ein weiteres Ausführungsbeispiel der erfindungsgemäßen Lagerung zeigen die Figuren 8 und 9. Das dort gezeigte Ausführungsbeispiel unterscheidet sich von den in den Figuren 2 bis 5 dargestellten Ausführungsbeispielen dadurch, dass die Induktionsspule 25' innerhalb der Keramikhülse (Keramikrohr) 33 angeordnet ist bzw. ein Inneninduktor vorgesehen ist, dem ein Gegenpol in Form eines Außenringes 24' zugeordnet ist. Der Außenring 24' ist mit dem Tragarm 3 verschweißt, wobei die umlaufende Schweißnaht 30 als Dichtung dient. Die innerhalb der Keramikhülse und 33 mit geringem Abstand zu dieser angeordnete Induktionsspule (Inneninduktor) 25' ist an einer mit dem Tragarm 3 verbundenen Halterung 48 angebracht. Der Außenring 24' und die innerhalb des Außenrings angeordnete Induktionsspule 25' definieren einen zylindrischen Ringspalt (Dichtspalt) 32, in den die Keramikhülse 33 mit ausreichendem Spiel berührungsfrei eingreift. Die Abdichtung des Lagers 9 gegen ein Eindringen von Metallschmelze ist bei diesem Ausführungsbeispiel zwischen der Keramikhülse (Keramikrohr) 33 und dem Außenring 24' verwirklicht.

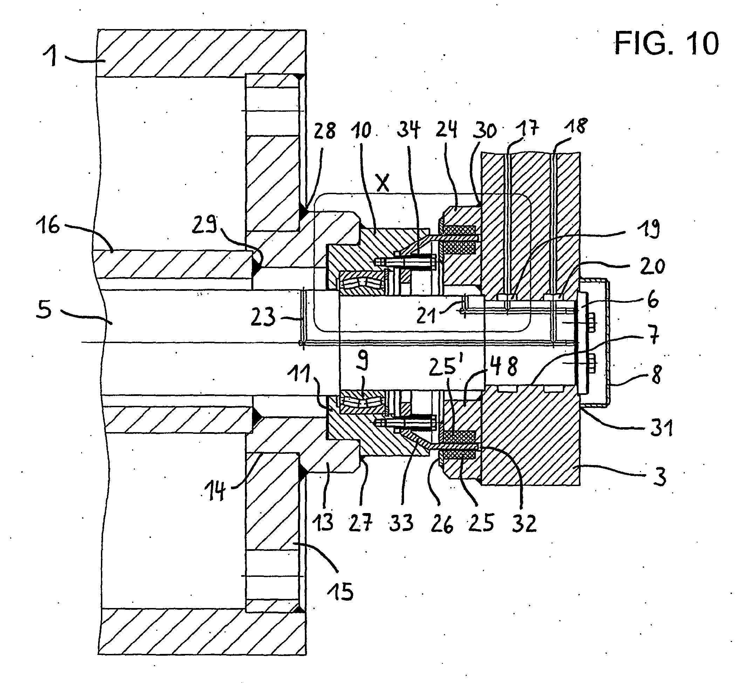

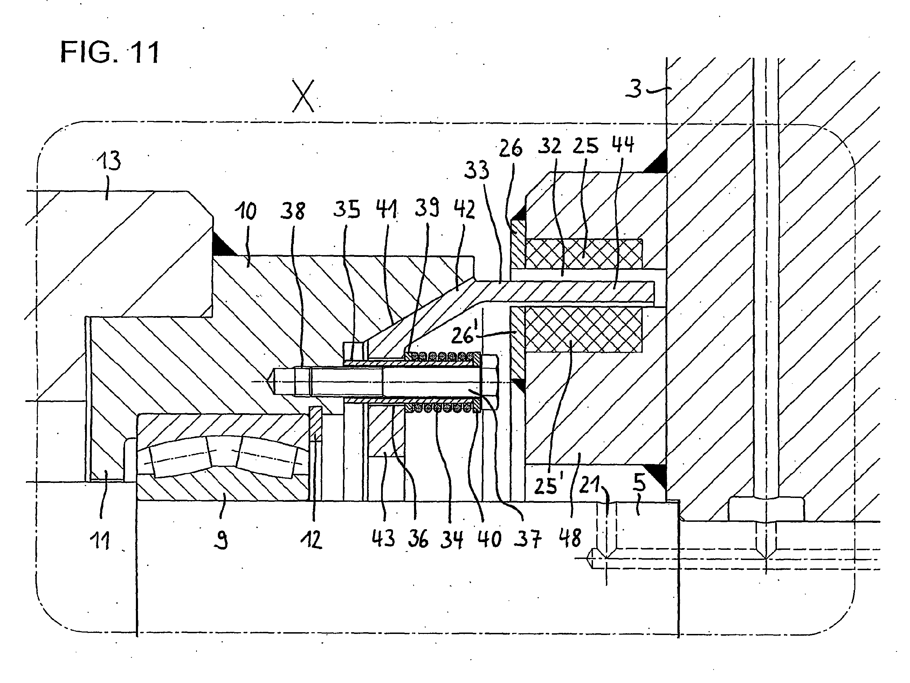

Die Figuren 10 und 11 zeigen schließlich ein Ausführungsbeispiel, bei dem außerhalb und innerhalb der Keramikhülse 33 je eine Induktionsspule 25, 25' angeordnet ist. Die äußere Induktionsspule (Außeninduktor) 25 ist in einem mit dem Tragarm 3 abgedichtet verbundenen Metallring 24 und die innere Induktionsspule (Inneninduktor) 25 in einem mit dem Tragarm verbundenen Innenring 48 gelagert. Die äußere Induktionsspule 25 und die innere Induktionsspule 25' definieren einen zylindrischen Ringspalt (Dichtspalt) 32, in den die Keramikhülse 33 mit berührungsfrei eingreift. Die Abdichtung des Wälzlagers 9 gegen ein Eindringen von Metallschmelze ist bei diesem Ausführungsbeispiel zwischen dem Außeninduktor 25 und der Keramikhülse (Keramikrohr) 33 verwirklicht, wobei die äußere Induktionsspule 25 und die innere Induktionsspule 25' in Reihe oder parallel geschaltet sind.

Die Erfindung ist in ihrer Ausführung nicht auf die vorstehend beschriebenen Ausführungsbeispiele beschränkt. Vielmehr sind verschiedene Varianten denkbar, die auch bei grundsätzlich abweichender Gestaltung von dem in den beiliegenden Ansprüchen enthaltenen Erfindungsgedanken Gebrauch machen. Beispielsweise können anstelle einer durchgehenden Achse 5 auch Tragzapfen oder eine Welle bei der Lagerung der Umlenk- bzw. Führungsrolle 1 zum Einsatz kommen. Ferner können die in den Figuren 6 bis 11 dargestellten Ausführungsbeispiele auch derart gestaltet werden, dass anstelle der kegelförmigen Keramikhülse 33 und dem entsprechenden Lagergehäuse 10 die keramische Hülse 33' mit ebener Stirnfläche 41" und das entsprechende Lagergehäuse 10' (vgl. Figuren 4 und 5) verwendet werden.

### Bezugszeichenliste

- 1: Umlenk- oder Führungsrolle (Zinkbadrolle)
- 2: Rollentragarm
- 3: Rollentragarm
- 4: Traverse
- 5: durchgehende Achse
- 6: Endscheibe
- 7: Durchbrechung / Bohrung
- 8: Dichtkappe
- 9: Lager (Wälzlager)
- 10: Lagergehäuse
- 10': Lagergehäuse
- 11: Absatz am Lagergehäuse
- 12: Sicherungsring
- 13: buchsenförmiger Adapter
- 14: Ausnehmung
- 15: Stirnplatte der Zinkbadrolle
- 16: durchgehendes Rohr
- 17: Lüftungsbohrung
- 18: Lüftungsbohrung
- 19: Ringnut
- 20: Ringnut
- 21: zuleitende Lüftungsbohrung
- 22: Topfscheibe (Gegenpol)
- 23: ableitende Lüftungsbohrung
- 24: Metallring (ringförmiges Spulengehäuse)
- 24': Außenring
- 25: Induktionsspule (Außeninduktor)
- 25': Induktionsspule (Inneninduktor)
- 26: Verschlussring
- 26': Verschlussring
- 27: Schweißnaht
- 28: Schweißnaht
- 29: Schweißnaht
- 30: Schweißnaht
- 31: Schweißnaht
- 32: Dichtspalt
- 33: Keramikhülse
- 33': Keramikhülse
- 34: Druckfeder
- 35: Metallhülse
- 36: Ausnehmung / Bohrung
- 37: Schraubbolzen
- 38: Gewindebohrung
- 39: Ringscheibe
- 40: Ringscheibe
- 41: Dichtungsfläche
- 41': Stirnfläche
- 41": Stirnfläche
- 42: kegelförmiger Abschnitt
- 43: ringscheibenförmiger Abschnitt
- 44: zylindrischer Abschnitt
- 45: Dichtung
- 46: Absatz an der Keramikhülse (Zentrierabsatz)
- 47: Aufnahmebohrung für Wälzlager
- 48: Halterung (Innenring)

## Patentansprüche

1. Lagerung für eine in einem Metallschmelzebad getaucht angeordnete Umlenk- oder Führungsrolle (1) für zu beschichtendes Metallband, die an Rollentragarmen (2, 3) mittels Lager (9) drehbar gelagert ist, wobei die Lager (9) gegen das Metallschmelzebad mittels mindestens einer Induktionsspule (25, 25') abgedichtet sind, die eine der Umlenk- oder Führungsrolle zugeordnete Achse (5), Welle oder einen Tragzapfen umgibt und einen ringförmigen Dichtspalt (32) begrenzt,
**dadurch gekennzeichnet, dass** in dem Dichtspalt (32) eine Hülse (33) aus keramischem Werkstoff mit Abstand zu der Induktionsspule (25) angeordnet ist.

2. Lagerung nach Anspruch 1,
**dadurch gekennzeichnet, dass** die keramische Hülse (33, 33') mit einem aus Metall hergestellten Lagergehäuse (10, 10') abgedichtet verbunden ist.

3. Lagerung nach Anspruch 2,
**dadurch gekennzeichnet, dass** die keramische Hülse (33, 33') gegen das Lagergehäuse (10, 10') abdichtend gedrückt ist, wobei federelastische Mittel (34) vorgesehen sind, die unter Aufrechterhaltung der Druckwirkung zwischen Hülse (33, 33') und Lagergehäuse (10, 10') eine durch unterschiedliche Ausdehnungskoeffizienten bedingte Relatiwerschiebung zwischen Hülse (33, 33') und Lagergehäuse (10, 10') zulassen.

4. Lagerung nach Anspruch 3,
**dadurch gekennzeichnet, dass** die federelastischen Mittel aus mindestens einer Druckfeder (34) bestehen.

5. Lagerung nach Anspruch 4,
**dadurch gekennzeichnet, dass** die Druckfeder (34) auf einer metallischen Hülse (35) geführt ist, die eine Ausnehmung oder Bohrung (36) in der keramischen Hülse (33, 33') durchdringt und durch eine Schraubverbindung (37, 38) an dem Lagergehäuse (10, 10') befestigt ist.

6. Lagerung nach einem der Ansprüche 2 bis 5,
**dadurch gekennzeichnet, dass** die keramische Hülse (33) und das Lagergehäuse (10) sich berührende, konisch ausgebildete Dichtungsflächen (41) aufweisen.

7. Lagerung nach einem der Ansprüche 2 bis 5,
**dadurch gekennzeichnet, dass** die keramische Hülse (33') und das Lagergehäuse (10') ebene Stirnflächen (41', 41") aufweisen.

8. Lagerung nach Anspruch 7,
**dadurch gekennzeichnet, dass** zwischen den ebenen Stirnflächen (41', 41") eine ringförmige Dichtung (45) angeordnet ist.

9. Lagerung nach einem der Ansprüche 1 bis 8,
**dadurch gekennzeichnet, dass** die keramische Hülse (33, 33') die Induktionsspule (25) in axialer Richtung überragt.

10. Lagerung nach einem der Ansprüche 1 bis 9,
**dadurch gekennzeichnet, dass** der Induktionsspule (25) ein ringsförmiger Gegenpol (22) zugeordnet ist, der mit Abstand zu der keramischen Hülse (33, 33') angeordnet ist.

11. Lagerung nach Anspruch
**dadurch gekennzeichnet, dass** der ringförmige Gegenpol (22) in Form einer eine Durchgangsöffnung aufweisenden Topfscheibe ausgebildet ist.

12. Lagerung nach Anspruch 10 oder 11,
**dadurch gekennzeichnet, dass** der ringförmige Gegenpol (22) radial beabstandet zu der Achse (5), Welle oder dem Tragzapfen angeordnet ist.

13. Lagerung nach einem der Ansprüche 10 bis 12,
**dadurch gekennzeichnet, dass** der ringförmige Gegenpol (22) axial beabstandet zum Lagergehäuse (10, 10') angeordnet ist.

14. Lagerung nach einem der Ansprüche 10 bis 13,
**dadurch gekennzeichnet, dass** der ringförmige Gegenpol (22) am Rollentragarm (3) lösbar befestigt ist.

15. Lagerung nach einem der Ansprüche 1 bis 14,
**dadurch gekennzeichnet, dass** das Lagergehäuse (10, 10') drehfest mit der Umlenk- oder Führungsrolle (1) verbunden ist.

16. Lagerung nach einem der Ansprüche 1 bis 15,
**dadurch gekennzeichnet, dass** die Rollentragarme (2, 3) einerseits und die Achse (5) oder Welle oder der Tragzapfen andererseits Lüftungsbohrungen (17, 18, 21, 23) aufweisen.

17. Lagerung nach einem der Ansprüche 1 bis 16,
**dadurch gekennzeichnet, dass** der Umlenk- oder Führungsrolle (1) eine durchgehende Achse (5) zugeordnet ist, die drehfest mit den Rollentragarmen (2, 3) verbunden ist.

18. Lagerung nach einem der Ansprüche 1 bis 17,
**dadurch gekennzeichnet, dass** die Induktionsspule (25') innerhalb der keramischen Hülse (33, 33') und beabstandet zu dieser angeordnet ist.

19. Lagerung nach einem der Ansprüche 1 bis 9,
**dadurch gekennzeichnet, dass** eine erste Induktionsspule (25) außerhalb der keramischen Hülse (33) und eine zweite Induktionsspule (25) innerhalb der keramischen Hülse (33) angeordnet ist, wobei die beiden Induktionsspulen (25, 25') einen Dichtspalt (32) definieren, in den die keramische Hülse (33) berührungsfrei eingreift.

## Claims

1. Bearing arrangement for a deflection or guiding roller (1) for a metal band to be coated, said roller (1) being arranged immersed in a molten metal bath and being rotatably supported on roller support arms (2, 3) by means of bearings (9), wherein said bearings (9) are sealed against said molten metal bath by means of at least one induction coil (25, 25') surrounding an axle (5), a shaft or a supporting pivot associated with said deflection or guiding roller and defining an annular sealing gap (32),
**characterized in that** a bushing (33) made of ceramic material is arranged in the sealing gap (32) at a distance to the induction coil (25).

2. Bearing arrangement according to claim 1,
**characterized in that** the ceramic bushing (33, 33') is sealingly joined to a bearing housing (10, 10') made of metal.

3. Bearing arrangement according to claim 2,
**characterized in that** the ceramic bushing (33, 33') is sealingly pressed against the bearing housing (10, 10'), wherein resilient means (34) are provided which permit a relative shifting between bushing (33, 33') and bearing housing (10, 10') due to different coefficients of expansion while maintaining the pressing action between bushing (33, 33') and bearing housing (10, 10').

4. Bearing arrangement according to claim 3,
**characterized in that** the resilient means consist of at least one compression spring (34).

5. Bearing arrangement according to claim 4,
**characterized in that** the compression spring (34) is guided on a metallic sleeve (35) which penetrates a recess or bore (36) in the ceramic bushing (33, 33') and which is attached to the bearing housing (10, 10') by means of a screw connection (37, 38).

6. Bearing arrangement according to one of claims 2 to 5,
**characterized in that** the ceramic bushing (33) and the bearing housing (10) have conically shaped sealing surfaces (41) contacting each other.

7. Bearing arrangement according to one of claims 2 to 5,
**characterized in that** the ceramic bushing (33') and the bearing housing (10') have flat end faces (41', 41").

8. Bearing arrangement according to claim 7,
**characterized in that** an annular seal (45) is arranged between the flat end faces (41', 41").

9. Bearing arrangement according to one of claims 1 to 8,
**characterized in that** the ceramic bushing (33, 33') projects over the induction coil (25) in axial direction.

10. Bearing arrangement according to one of claims 1 to 9,
**characterized in that** an annular antipole (22) arranged at a distance to the ceramic bushing (33, 33') is associated with the induction coil (25).

11. Bearing arrangement according to claim 10,
**characterized in that** the annular antipole (22) is in the form of a cup disc provided with a through-hole.

12. Bearing arrangement according to claim 10 or 11,
**characterized in that** the annular antipole (22) is arranged at a radial distance to the axle (5), shaft or supporting pivot.

13. Bearing arrangement according to one of claims 10 to 12,
**characterized in that** the annular antipole (22) is arranged at an axial distance to the bearing housing (10, 10').

14. Bearing arrangement according to one of claims 10 to 13,
**characterized in that** the annular antipole (22) is detachably mounted to the roller support arm (3).

15. Bearing arrangement according to one of claims 1 to 14,
**characterized in that** the bearing housing (10, 10') is connected to the deflection or guiding roller (1) in a rotationally fixed manner.

16. Bearing arrangement according to one of claims 1 to 15,
**characterized in that** the roller support arms (2, 3) on the one hand and the axle (5), or shaft or the supporting pivot on the other hand are provided with vent holes (17, 18, 21, 23).

17. Bearing arrangement according to one of claims 1 to 16,
**characterized in that** the deflection or guiding roller (1) is associated with a continuous axle (5) which is connected to the roller support arms in a rotationally fixed manner.

18. Bearing arrangement according to one of claims 1 to 17,
**characterized in that** the induction coil (25') is arranged inside the ceramic bushing (33, 33') at a distance thereto.

19. Bearing arrangement according to one of claims 1 to 9,
**characterized in that** a first induction coil (25) is arranged outside the ceramic bushing (33) and a second induction coil (25) is arranged inside the ceramic bushing (33), the two induction coils (25, 25') defining a sealing gap (32) into which the ceramic bushing contactlessly engages.

## Revendications

1. Agencement de palier pour un rouleau de renvoi ou de guidage (1), placé au trempé dans un bain de métal en fusion, pour bande de métal, qui est monté, en rotation au moyen de paliers (9), sur des bras de support de rouleau (2, 3), dans lequel les paliers (9) sont étanchéifiés par rapport au bain de métal en fusion au moyen d'au moins une bobine d'induction (25, 25'), qui entoure un axe (5), associé au rouleau de renvoi ou de guidage, un arbre ou un tourillon porteur, et limite un interstice d'étanchéité (32) en forme d'anneau, **caractérisé en ce que**, dans l'interstice d'étanchéité (32), est installée une douille (33) en matériau céramique, qui est disposée à distance de la bobine d'induction (25).

2. Agencement de palier selon la revendication 1, **caractérisé en ce que** la douille en matériau céramique (33, 33') est reliée, de manière étanche, à un logement de palier (10, 10') fabriqué en métal.

3. Agencement de palier selon la revendication 2, **caractérisé en ce que** la douille en matériau céramique (33, 33') est pressée, de manière étanche, contre le logement de palier (10, 10'), sachant que sont prévus des moyens élastiques faisant ressort (34), qui, en maintenant l'effet de pression entre la douille (33, 33') et le logement du palier (10, 10'), permettent un déplacement relatif entre la douille (33, 33') et le logement de palier (10, 10'), grâce à un coefficient de dilatation différent entre la douille (33, 33') et le logement de palier (10, 10').

4. Agencement de palier selon la revendication 3, **caractérisé en ce que** les moyens élastiques faisant ressort consistent en au moins un ressort de pression (34).

5. Agencement de palier selon la revendication 4, **caractérisé en ce que** le ressort de pression (34) est guidé sur une douille métallique (35), qui traverse un évidement ou un alésage (36) dans la douille en matériau céramique (33'), et est fixée au logement de palier (10, 10') par un assemblage à vis (37, 38).

6. Agencement de palier selon l'une des revendications 2 à 5, **caractérisé en ce que** la douille en matériau céramique (33) et le logement de palier (10) présentent des surfaces d'étanchéité (41) de forme conique, qui se touchent.

7. Agencement de palier selon l'une des revendications 2 à 5, **caractérisé en ce que** la douille en matériau céramique (33') et le logement de palier (10') présentent des surfaces frontales planes (41', 41").

8. Agencement de palier selon la revendication 7, **caractérisé en ce que**, entre les surfaces frontales planes (41', 41") est disposée un joint d'étanchéité en forme de bague (45).

9. Agencement de palier selon l'une des revendications 1 à 8, **caractérisé en ce que** la douille en matériau céramique (33, 33') fait saillie au-delà de la bobine d'inductance (25), dans la direction axiale.

10. Agencement de palier selon l'une des revendications 1 à 9, **caractérisé en ce qu'**à la bobine d'inductance (25) est associé un pôle opposé (22) de forma annulaire, qui est disposé à distance de la douille en matériau céramique (33, 33').

11. Agencement de palier selon la revendication 10, **caractérisé en ce que** le pôle opposé (22) annulaire est réalisé sous la forme d'une coupelle, qui présentant une ouverture de passage.

12. Agencement de palier selon revendication 10 ou 11, **caractérisé en ce que** le pôle opposé (22) de forme annulaire est disposé radialement à distance de l'axe (5), de l'arbre ou du tourillon porteur.

13. Agencement de palier selon l'une des revendications 10 à 12, **caractérisé en ce que** le pôle opposé (22) de forme annulaire est disposé axialement à distance du logement du palier 10, 10'').

14. Agencement de palier selon l'une des revendications 10 à 13, **caractérisé en ce que** le pôle opposé (22) de forme annulaire est fixé de manière amovible au bras de support de rouleau (3).

15. Agencement de palier selon l'une des revendications 1 à 14, **caractérisé en ce que** le logement de palier (10, 10') est relié solidaire en rotation au rouleau de renvoi ou de guidage (1).

16. Agencement de palier selon l'une des revendications 1 à 15, **caractérisé en ce que** les bras de support de rouleau (2, 3), d'une part, et l'axe (5), ou l'arbre ou le tourillon porteur, d'autre part, présentent des alésages d'aération (17, 18, 21, 23).

17. Agencement de palier selon l'une des revendications 1 à 16, **caractérisé en ce qu'**au rouleau de renvoi ou de guidage (1) est associé un axe continu (5), qui est relié solidaire en rotation au bras de support de rouleau (2, 3).

18. Agencement de palier selon l'une des revendications 1 à 17, **caractérisé en ce que** la bobine d'induction (25') est disposée à l'intérieur de la douille en matériau céramique (33, 33') et à distance de celle-ci.

19. Agencement de palier selon l'une des revendications 1 à 9, **caractérisé en ce qu'**une première bobine d'induction (25) est disposée à l'extérieur de la douille en matériau céramique (33) et qu'une deuxième bobina d'induction (25') est disposée à l'intérieur de la douille en matériau céramique (33), les deux bobines d'induction (25, 25') définissant un interstice d'étanchéité, dans lequel s'engage, sans entrée en contact, la douille en matériau céramique (33).
